## Europäisches Patentamt
## European Patent Office
## Office européen des brevets

(11) Publication number: **0 115 918**
**A1**

(12) # EUROPEAN PATENT APPLICATION

(21) Application number: **84300253.6**

(22) Date of filing: **17.01.84**

(51) Int. Cl.³: **A 01 K 31/16**

(30) Priority: **19.01.83 GB 8301451**
**16.05.83 GB 8313379**

(43) Date of publication of application: **15.08.84**
**Bulletin 84/33**

(84) Designated Contracting States: **BE CH DE FR IT LI NL**

(71) Applicant: **Carter, Robert, Brooks Farmhouse Brooks Lane, Hambledon Portmouth Hampshire P07 6TF (GB)**
Applicant: **Component Plastics Limited, Relcon Works 35 Sutherland Road, Walthamstow E17 6BH (GB)**

(72) Inventor: **Carter, Robert, Brooks Farmhouse Brooks Lane, Hambledon Portsmouth Hampshire PO7 6TF (GB)**

(74) Representative: **Brooks, Nigel Samuel, Hebberdens Lower Bordean, Petersfield Hampshire GU32 1ES (GB)**

(54) **Egg screen.**

(57) An egg screen for a battery cage has two opaque juxtaposed overlapping curtains (2, 3). Each has slits (5) extending upwards from the bottom edge thereof. The slits (5) in one curtain (2, 3) are staggered with respect to the slits (5) in the other curtain (3, 2). Release-paper-backed tape adhesive (7, 8) is provided at the top edges of the curtains for securing them together and attaching them to an appropriate battery cage part.

## EGG SCREEN

The present invention relates to an egg screen for in particular so-called battery cage systems.

In such a system, hens usually chickens, are normally kept in individual cages, for four or five hens with the cages being arranged in rows. Usually several rows are arranged one above the other in banks, with several banks being provided in each house. The individual cages have sloping floors, normally of metal grids, down which eggs roll when laid to pass out of the front of the cage to either a rack (which may be an integral part of the floor) or a conveyor for collection of the eggs either manually or automatically respectively. Whichever egg collection means is provided, eggs are present in front of the cage for some time in a position where the hens can reach out of their cages and peck open and eat the eggs. This is a significant economic problem in the industry.

This problem is aggravated by the design of many cages whereby a liftable gate is provided at the front of each cage for allowing the hens to be placed in the cage. Such a gate normally has a foot guard extending inwardly of the cage at the bottom of the gate. The hens can lift such gates to an extent to reach the eggs. They even manage to reach the eggs in cages of alternative design where the gate is fixed to the feed trough which extends along the front of the cage.

A further problem is that an egg laid at the back of a cage can gain considerable speed in rolling down the sloping floor to the egg collection rack or conveyor. If this egg strikes another egg waiting for collection, there is a strong likelihood of one or other or both being cracked. A significant number of "seconds" are thus produced. This is a significant economic problem.

It has been proposed in British Patent Specification No. 1,081,275 to place a light weight slitted plastics material curtain hanging down from the feed trough to the floor of the cage to protect the egg collecting conveyor belt from being soiled by feed particles, droppings, feathers and the like. However in practical tests of the present invention it has been found that such a light weight single screen is inadequate to discourage hens from pecking eggs awaiting collection, and offers negligible resistance to egg roll as is emphasised in the reference above.

The object of the invention is to provide a screen to cut down loss of eggs.

An egg screen of a first aspect of the invention for a battery cage comprises a multi-element curtain structure having a plurality of overlapping strips arranged to permit passage of an egg therethrough at a free bottom edge thereof, means for securing the curtain structure together at the top edge thereof and means for attaching the curtain structure to the cage at the top edge of the said structure.

The screen is preferably opaque to obstruct vision therethrough, although it is anticipated that a screen which was not opaque could provide advantages in slowing the roll of the eggs.

It is envisaged that the curtain structure may be built up from individual strip elements secured together. However it is preferred that the strips are provided by partially slitting sheet material.

An egg screen of a second aspect of the invention for a battery cage comprises two opaque juxtaposed overlapping curtains each having slits extending upwards from the bottom edge thereof, the slits in one curtain being staggered with respect to the slits in the other curtain, means for securing the two curtains together above the slits and means for attaching the curtains to the cage, whereby in use the screen can be fitted to extend to the floor of the cage at the egg outlet from the cage and can obscure the view of a hen in the cage of an egg in position on egg collection means at the

0115918

cage.

The particular advantage of employing two curtains is that even if the hens peck at the inner curtain, they do not open lines of sight to eggs since the outer curtain still obscures their view. Preferably the curtains are of heavy gauge laminar plastics material, heavy gauge material having the advantage of not curling readily when pecked. 0.2mm to 0.3mm (0.008" to 0.012") thick material has been found suitable although 0.25mm (0.010") material is preferred. Further to discourage pecking of the curtains, they are preferably of material which is slippery to touch - polyethylene or polyvinylchloride being suitable.

The height and spacing of the slits is preferably chosen in combination with the material of the curtains to restrain the eggs from rolling too fast past the screen. With the preferred material a slit height of 50mm to 80mm (2.0" to 3.2"), preferably 60mm (2.4"), and a slit spacing of 40mm to 60mm (1.6" to 2.4"), preferably 50mm (2.0"), have been found to be suitable. In practice use of egg screens having the preferred characteristics has resulted in a three fold improvement in egg production.

(i) Firstly a 5% increase in egg numbers was noted due to lack of egg pecking,

(ii) Secondly, a 5% unexpected increase in perfect egg numbers was noted due to a 60% decrease in the number of "seconds", namely cracked and yolk soiled eggs, and

(iii) Thirdly due to lack of egg pecking, the egg collection means did not become soiled with yolk from part eaten eggs.

It is envisaged that the curtains may be secured together by stitching, welding or glueing. However it is preferred that the securing means may be incorporated with the means for attaching the egg screen. This may be by rivets or clips engaging through apertures in the curtains to appropriate cage parts. However the preferred combined securing and attaching means is release-paper-backed double-sided tape adhesive, one side of which adheres in use to the appropriate cage part, whilst the other adheres to both curtains by means of the top edge of one being displaced from the top edge of the other. Prior to attachment, the curtains are secured together by the inherent, strength of the tape adhesive and the paper backing to which both curtains are temporarily adhered. In place of tape adhesive, double-sided adhesive tape - of the type having a central strengthening tape and a release-paper backing - may be used.

According to a third aspect of the invention there is provided an egg screen of the first or the second aspect of the invention attached to an appropriate battery cage part.

Where the appropriate part is a gate, normally hinged, having a foot guard the screen is preferably attached to an upstanding rim of the foot guard, to extend to the floor of the cage at the egg outlet when the gate is in its normal use position.

Where the gate is of the type clipped to the cage's feed trough, the appropriate part is the feed trough and the screen is preferably attached to an upstanding side of the feed trough to extend to the floor of the cage at the egg outlet.

Preferably each cage in a row of cages is fitted with a screen, not only to obscure the view of hens in each cage of eggs outside their cage but also, with conveyor egg collection, to obscure the view through the outlet of adjacent cages of eggs approaching on the conveyor.

Preferably the screens are attached at a height to just touch the cage floor. The maximum advisable gap is 1mm from the floor, beyond which there is a danger of hens viewing eggs beneath the screen.

To help understanding of the invention a specific embodiment thereof will now be described by way of example and with reference to the accompanying drawings, in which:-

Figure 1 is a front view of an egg screen;

Figure 2 is a back view of the screen;

Figure 3 is a cross-sectional end view on the line III-III in Figure 1 of the screen with an exaggerated horizontal scale;

Figure 4 is a cross-sectional end view of a front portion of a battery cage of one type with the screen fitted; and

Figure 5 is a similar cross-sectional end view of a battery cage of another type with the screen fitted.

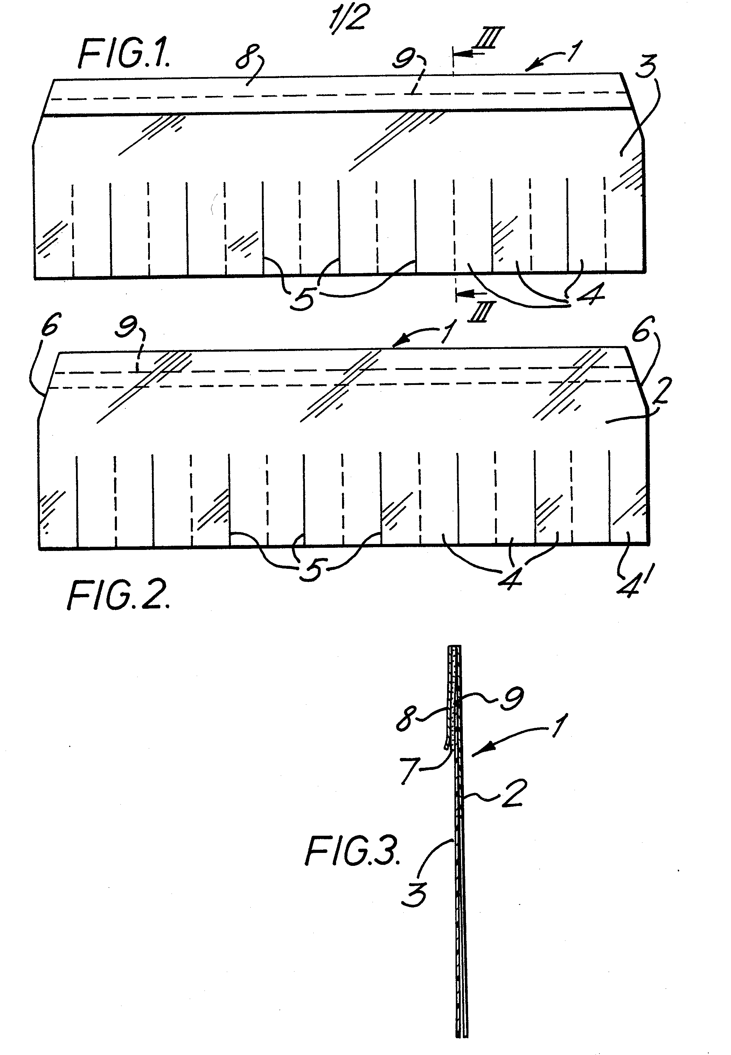

Referring first to Figures 1, 2 and 3 the screen 1 shown therein has an outer curtain 2 and an inner curtain 3 of black, heavy duty polyethylene sheet 0.25mm thick. Each curtain is cut upwards from its bottom edge into a series of strips 4 by a series of slits 5. The slits are spaced 50mm apart and are 60mm high, compared with an overall screen height of 132mm. This screen, which is suitable for a four hen cage, is 400mm long, and the strips of the outer curtain are all 50mm wide. As may be seen by the dashed lines, the slits in the inner curtain are equally spaced or staggered between the outer curtain slits with the result that the curtains' respective strips overlap, and vision through the screen is obscured. This is so even if after use the curtains become slightly creased with passage of eggs therethrough and pecking by the hens. However use of the heavy duty sheet for the curtains makes them resistant to pecking and sufficiently resilient to maintain shape. The slits are provided to allow the screen to deform for passage of an egg. Any tendency for the egg to "hang up" at the screen is overcome by the cage and floor in particular being slightly flexible and movable by the hens movement.

As a result of equal staggering of slits, two half length strips 4' are provided at the ends of the outer curtain 2. The top corners of the curtains are chamfered at 6 for ease of fitting to certain cages.

For securement of the curtains together prior to attachment and for attachment of the screen to a cage, the inner side top edge of the screen is provided with a strip of tape adhesive 7 covered prior to attachment with a release paper 8. The top edge 9 of the inner curtain 3 is 16mm below the top edge of the screen and of the outer curtain 2 whereby the 25mm deep tape adhesive 7 adheres to both curtains, securing them together with the aid of the release paper prior to attachment and attaching them both to the cage in use.

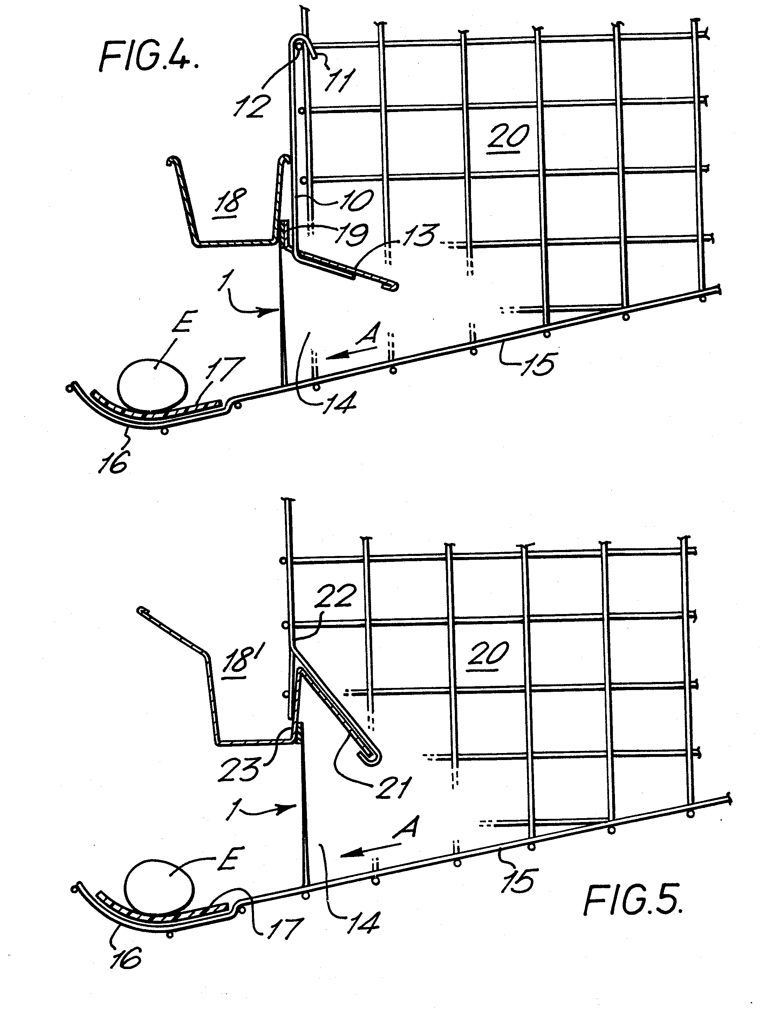

Figure 4, without showing full details of the cage, shows a cage with a hinged front gate 10 of wire bars hung by hooks 11 from a pivot 12. The gate has a welded on sheet metal foot guard 13 partially closing the egg outlet 14 between the gate 10 and the wire bar floor 15 of the cage. The egg outlet remains big enough to allow passage in the direction of the arrow A of an egg E to the collection rack 16 of the floor which as shown is provided with a conveyor belt 17. The egg outlet is sufficiently large for a hen to extend its neck through to reach the egg, especially when it can slightly lift the gate. A feed trough 18, accessible to the hens through the gate 10, is provided in front of the cage.

The screen 1 is attached by the tape adhesive 7 to the gate via an upstanding outer rim 19 of the foot guard 13, at such height to just touch the floor 15. It will be appreciated that the hens at the interior 20 of the cage can no longer view the eggs at the collection rack 16. As the eggs laid at the interior roll down the floor 15, their roll is slowed by the screen 1.

In the alternative cage shown in Figure 5, the feed trough 18' has an extension inwards 21 similar to the foot guard 13. The gate 22 is of construction to be clipped to the extension 21. Thus there is no rim for attachment of the screen 1, which in this instance is attached to the inner wall 23 of the feed trough 18'. It should be noted that in this position the curtain 3 described in respect of Figures 1 to 3 as being inner becomes the outer curtain and vice versa. The screen 1 still operates in the same manner as described in respect of Figure 4.

Although other means of attaching the screen could be employed it should be noted that adhering it to an at least substantially vertical cage member results in it being arranged for resilient return to an at least substantially vertical orientation after passage therethrough of an egg.

The invention is not intended to be restricted to the details of the above described embodiments. For instance, the length and height of the screens can be readily varied to suit different cages.

0115918

## CLAIMS

1. An egg screen for a battery cage comprising a multi-element curtain structure (2,3) having a plurality of overlapping strips (4) arranged to permit passage of an egg therethrough at a free bottom edge thereof, means (7,8) for securing the curtain structure (2,3) together at the top edge thereof and means (7) for attaching the curtain structre (2,3) to the cage at the top edge of the said structure (2,3).

2. An egg screen for a battery cage comprising two opaque juxtaposed overlapping curtains (2,3) each having slits (5) extending upwards from the bottom edge thereof, the slits (5) in one curtain (2,3) being staggered with respect to the slits (5) in the other curtain (3,2), means (7,8) for securing the two curtains (2,3) together above the slits (5) and means (7) for attaching the curtains (2,3) to the cage, whereby in use the screen can be fitted to extend to the floor (15) of the cage at the egg outlet (14) from the cage and can obscure view of a hen in the cage of an egg in position on egg collection means at the cage.

3. An egg screen as claimed in claim 2 wherein the curtains (2,3) are of heavy gauge laminar plastics material.

4. An egg screen as claimed in claim 3 wherein the heavy gauge material is from 0.2mm to 0.3mm, preferably 0.25mm, thick.

5. An egg screen as claimed in claim 3 or claim 4 wherein the heavy gauge material is slippery to touch, preferably being polyethylene or polyvinylchloride.

6. An egg screen as claimed in any one of claims 2 to 5 wherein the strips (4) are from 50mm to 80mm, preferably 60mm, high and from 40mm to 60mm, preferably 50mm, wide.

7. An egg screen as claimed in any preceding claim wherein the securing means and the attaching means are combined.

8. An egg screen as claimed in claim 7 as appendant to claim 2 or any claim appendant thereto wherein the combined securing and attaching means comprises release-paper-backed double-sided tape adhesive (7,8) or adhesive tape.

9. An egg screen as claimed in claim 8 wherein one curtain has a top edge (9) lower than that of the other curtain whereby one side of the tape adhesive or adhesive tape adheres to both curtains at their top edges.

10. An egg screen as claimed in any preceding claim in combination with a battery cage part (19,23) to which it is attached.

11. An egg screen in combination with a battery cage part as claimed in claim 10 wherein the battery cage part (19,23) extends at least substantially vertical in use and the means of attachment of the screen holds the screen at least substantially vertical in use.

12. An egg screen in combination with a battery cage part as claimed in claim 10 or claim 11 wherein the screen (1) when in use extends to the floor (15) of the cage at the egg outlet (14) of the cage.

13. An egg screen in combination with a battery cage part as claimed in claim 10, claim 11 or claim 12 wherein the battery cage part is an upstanding rim (19) of a cage gate footguard (13).

14. An egg screen in combination with a battery cage part as claimed in claim 10, claim 11 or claim 12 wherein the battery cage part is an upstanding side (23) of a feed trough (18') at the front of the cage.

0115918

FIG.1.

1/2

FIG.2.

FIG.3.

FIG.4.

11

12

18

10

19

13

20

1

E

A

17

14

15

16

22

18'

20

23

21

1

A

E

15

17

14

FIG.5.

16

**European Patent Office**

## EUROPEAN SEARCH REPORT

Application number

EP 84 30 0253

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 119 375 (ERNST) | | A 01 K 31/16 |
| | ----- | | |

**TECHNICAL FIELDS SEARCHED (Int. Cl. ³)**

A 01 K

The present search report has been drawn up for all claims

| Place of search | Date of completion of the search | Examiner |
|---|---|---|
| THE HAGUE | 25-04-1984 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82